# EUROPÄISCHE PATENTSCHRIFT

(11) **EP 2 502 699 B1**
(45) Veröffentlichungstag und Bekanntmachung des Hinweises auf die Patenterteilung: **16.11.2016**
(21) Anmeldenummer: 12001686.0
(22) Anmeldetag: 13.03.2012
(51) Int. Cl.: B23Q 1/00, B27D 5/00

(54) **Vorrichtung zur Bearbeitung von Werkstücken**
Processing device of worpieces
dispositif d'usinage de pièces

(30) Priorität: 25.03.2011 DE 102011014995
(43) Veröffentlichungstag der Anmeldung: 26.09.2012
(73) Patentinhaber: IMA Klessmann GmbH Holzbearbeitungssysteme, 32312 Lübbecke (DE)
(72) Erfinder: Hampel, Thomas, 32312 Lübbecke (DE); Redeker, Günter, 32351 Stemwede (DE)
(74) Vertreter: Schober, Mirko

(56) Entgegenhaltungen:
- EP-A1- 2 243 619
- EP-A1- 2 253 442
- EP-A1- 2 397 287
- EP-A2- 2 135 721
- DE-A1-102008 055 971

## Beschreibung

Die Erfindung betrifft eine Vorrichtung zur Bearbeitung von Werkstücken, gemäß dem Oberbegriff des Anspruchs 1. Eine solche Vorrichtung ist aus dem Dokument DE102008055971A bekannt.

Entsprechende Vorrichtungen sind zum Beispiel aus EP 743 139 A1 bekannt. Dort wird die von einer Arbeitsspindel aufgenommene Energie auf ein Arbeitsaggregat übertragen. Die Energieübertragung erfolgt dabei über einen Schleifkontakt. Diese Art der Energieübertragung ist hinsichtlich ihrer Zuverlässigkeit nicht immer ausreichend und wird den gesteigerten Ansprüchen an die Präzision und Wartungsfreundlichkeit von Werkstückbearbeitungsmaschinen nicht gerecht.

Weiter ist es aus US 7,431,682 B2, DE 602 09 188 T2 und EP 1 746 530 A1 bekannt, über RFID-Chips Informationen wie Daten berührungslos zu übertragen, insbesondere von Werkzeugen zu einer Maschine.

Aufgabe der vorliegenden Erfindung ist es, eine Vorrichtung der eingangs genannten Art anzugeben, die die geschilderten Nachteile nicht mehr aufweist.

Gelöst wird diese Aufgabe durch eine Vorrichtung mit den Merkmalen des Anspruchs 1. Vorteilhafte Ausführungsformen finden sich in den Unteransprüchen. Erfindungsgemäß ist vorgesehen, Daten und/oder Energie auf Aggregate oder von Aggregaten einer Vorrichtung zur Bearbeitung von Werkstücken berührungslos zu übertragen. Die Übertragung erfolgt vorzugsweise induktiv oder/und über Funk. Andere Übertragungsarten, z.B. optisch oder dergleichen sind ebenfalls denkbar. Aggregate im Sinne der Erfindung sind Antriebe wie Motoren, Stellantriebe, aber auch Bearbeitungsaggregate wie Fräser, Bohrer, Sägen sowie Sensoren, Steuerungs-, Regelungs- und/oder Messtechnik. Zur Übertragung der Signale, der Energie und/oder der Daten sind Kopplungselemente vorgesehen, zwischen denen die berührungslose Übertragung monodirektional oder auch bidirektional stattfinden kann.

Insbesondere ist dabei vorgesehen, dass wenigstens eine Energieversorgung und wenigstens ein damit gekoppeltes, mit Energie zu versorgendes Aggregat zum Bearbeiten des Werkstücks, Verschieben des Werkstücks oder eines anderen Bauteils der Vorrichtung vorgesehen ist. Die Kopplung zwischen dem wenigstens einen, mit Energie zu versorgenden Aggregat und der Energieversorgung ist dabei berührungslos. Diese berührungslose Kopplung ist so ausgelegt, dass hierüber die für den Antrieb des zu versorgenden Aggregats erforderliche Energie von der Energieversorgung auf den Antrieb übertragen wird. So lässt sich der Antrieb der vorhandenen Aggregate über die vom Aggregat getrennte Energieversorgung nicht nur steuern, sondern es wird auch über diese berührungslose Schnittstelle die erforderliche Antriebsenergie bereitgestellt.

Zusätzlich hierzu kann wenigstens eine Dateneinrichtung zur Datenversorgung mit dem wenigstens einen Aggregat vorgesehen sein, mit der das wenigstens eine Aggregat zum Erfassen und/oder Kommunizieren von bearbeitungs- oder steuerungsrelevanten Parametern der Vorrichtung berührungslos gekoppelt ist.

Mit der Erfindung lassen sich daher zahlreiche Anwendungen realisieren. Dies wird anhand zweier Ausführungsbeispiele mit den Zeichnungen der Figuren 1 bis 4 näher erläutert.
Figur 1 zeigt eine erfindungsgemäße Vorrichtung, die als Bekantungsaggregat ausgebildet ist, in perspektivischer Ansicht.
Figur 2 zeigt die Vorrichtung aus Figur 1 in Draufsicht.
Figur 3 zeigt einen Ausschnitt aus einer weiteren erfindungsgemäßen Vorrichtung.
Figur 4 zeigt eine perspektivische Ansicht der in Figur 3 ausschnittweise gezeigten Vorrichtung.

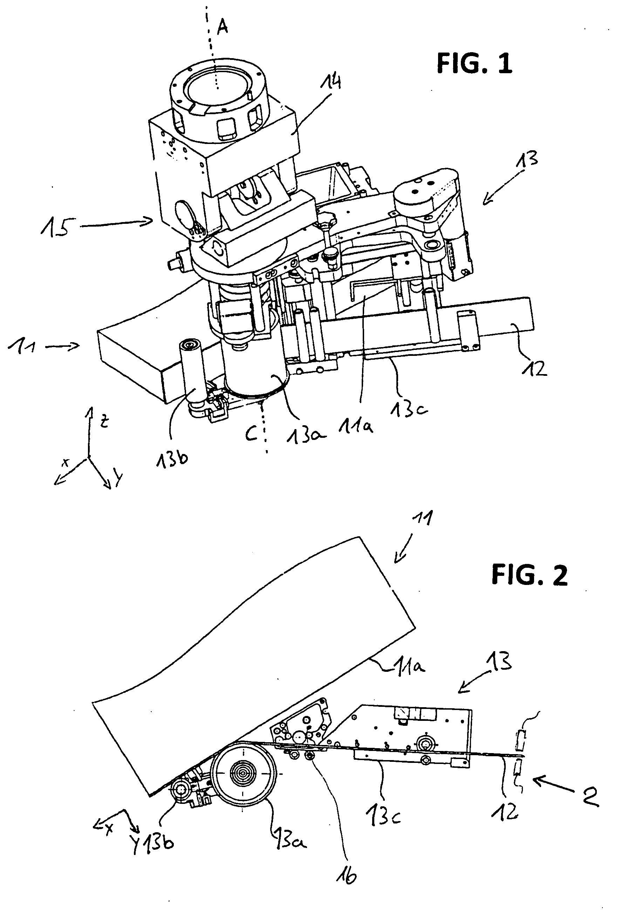

Die in Figur 1 und 2 gezeigte Bekantungsvorrichtung 13 dient zur Bekantung der Schmalseite 11a eines plattenförmigen Werkstücks 11 aus Holz- oder Holzaustauschstoffen. Dabei wird ein Kantenband 12 der Schmalseite 11a zugeführt und mit dieser unter relativem Verschieben von Werkstück 11 und Kantenband 12 zusammengefügt. Im gezeigten Beispiel ist dazu ein Verleimaggregat 16 vorgesehen, welches das mittels einer Zuführeinrichtung 13c zugeführte Kantenband 12 mit Schmelzklebstoff beschichtet. Nach dem Fügen wird das Kantenband 12 mittels um die Achse C drehbaren Andruckrollen 13a, 13b an der Schmalseite 11a des Werkstücks 11 angedrückt. Die Überstände des Kantenbandes 12 werden nach der Verleimung mit dem Werkstück 11 bündig gefräst.

Die Bekantungsvorrichtung 13 ist im gezeigten Beispiel Teil eines Freiform-Bearbeitungszentrums und ist deshalb mit einer Arbeitsspindel gekoppelt, welche in einem Spindelgehäuse untergebracht und um eine Achse A drehbar ist. Die Erfindung eignet sich jedoch nicht nur für Bearbeitungszentren, sondern z.B. auch für Bekantungsvorrichtungen, die im sog. Durchlaufverfahren arbeiten. Im gezeigten Beispiel ist die Einheit 13 gegenüber einem (hier nicht gezeigten) Spindelgehäuse drehbar, einerseits um eine Achse parallel zur Richtung Z, andererseits auch um eine Achse parallel zur Richtung Y. Die Einheit 13 und das Spindelgehäuse sind über hier nicht näher dargestellte erste und zweite Kopplungselemente gekoppelt, wobei eines an der Einheit 13 und eines am Spindelgehäuse vorgesehen ist. Die genannten Bewegungen der Einheit 13 gegenüber dem Spindelgehäuse können so beispielsweise über eine induktive Kopplung von der Spindel bzw. deren Energieversorgung induktiv auf die Einheit 13 übertragen werden.

Über diese oder eine ähnliche Kopplung lassen sich alternativ oder ergänzend hierzu auch Daten oder Signale übertragen. Beispielsweise kann die Bekantungsvorrichtung mit einem Sensor 2 zur Erfassung der Dicke bzw. der Dickenänderungen des Kantenbandes 12 versehen sein. Erfindungsgemäß werden diese Daten über die berührungslose Kopplung dann an einen Speicher oder eine Steuereinheit gesendet und stehen dort z.B. für den Vorgang des nach der Verleimung durchzuführenden Schritts des Bündigfräsens zur Verfügung, bei welchem die Informationen der über die Kantenbandlänge variierenden Dicke verwendet werden können, um den Stellantrieb für die Zustellung des Fräskopfes zu verändern. Natürlich kann das nachfolgend eingesetzte Fräsaggregat nicht nur berührungslos zugestellt werden, sondern selbst durch berührungslose Kopplung angesprochen werden.

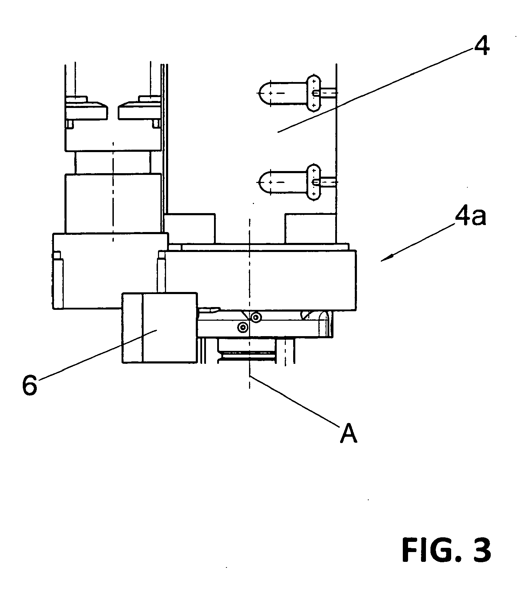

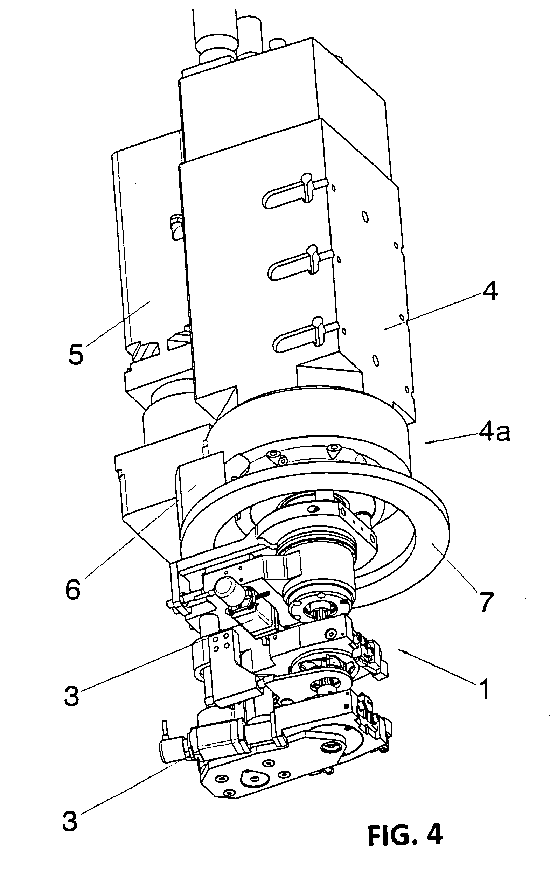

In den Figuren 3 und 4 ist eine um die Achse A drehbare und von einem Antrieb 5 angetriebene Arbeitsspindel 4 eines Bearbeitungszentrums gezeigt. Am unteren Teil 4a des Spindelkastens ist ein erstes, bevorzugt fest angeordnetes Kopplungselement 6 vorgesehen. Dieses Kopplungselement 6 wirkt berührungslos - im gezeigten Beispiel induktiv - mit einem zweiten Kopplungselement 7 am Aggregat zusammen, welches im in der Zeichnung oberen Bereich des gegenüber an der Spindel hängenden Aggregats 1 vorgesehen und mit dem Aggregat 1 verbunden ist. Über diese Kopplung kann insbesondere auf das Aggregat 1 Energie übertragen werden. Insbesondere können rotierende Bauteile angetrieben werden. Auch ist es möglich, die mit 3 gekennzeichneten Stellmotoren mit der erforderlichen Energie zu versorgen.

Natürlich ist es auch möglich, über die genannte Schnittstelle 6, 7 Daten zu übertragen, etwa - wie im Falle der in den Figuren 1 und 2 gezeigten Ausführungsform - indem Messsignale von Sensoren empfangen und an eine Speicher- oder Steuereinheit (nicht gezeigt) weiter geleitet werden. Die so gewonnenen Daten können ihrerseits auch als Regel-, Steuer- oder Stellgrößen eingesetzt und ggf. an weitere Aggregate übertragen werden.

Über die berührungslose Schnittstelle, wobei hiervon auch mehrere Schnittstellen vorhanden sein können, etwa, um Energie und Daten getrennt, z.B. über Induktion oder Funk, übertragen zu können, kann also einerseits das Erfassen und/oder Kommunizieren von bearbeitungs- oder steuerungsrelevanten Parametern der Vorrichtung erreicht werden, zum Anderen können Aggregate berührungslos bewegt werden. Hierdurch entfallen störende Zuleitungen, die die Bewegungsfreiheit der Aggregate einschränken. Weiter wird die Anfälligkeit gegenüber dem Verschleiß von Kraft übertragenden Bauteilen verringert.

## Patentansprüche

1. Vorrichtung zur Bearbeitung von Werkstücken aus Holz- oder Holzersatzwerkstoffen mit wenigstens einer Energieversorgung und wenigstens einem damit gekoppelten, mit Energie zu versorgenden Aggregat (1, 2, 3) zum Bearbeiten des Werkstücks, Verschieben des Werkstücks oder eines anderen Bauteils der Vorrichtung, wobei die Kopplung zwischen dem wenigstens einen, mit Energie zu versorgenden Aggregat (1, 2, 3) und der Energieversorgung berührungslos ist, wobei die berührungslose Kopplung so ausgelegt ist, dass hierüber die für den Antrieb des zu versorgenden Aggregats (1, 2, 3) erforderliche Energie von der Energieversorgung auf den Antrieb (1, 2, 3) übertragbar ist, wobei wenigstens eine Dateneinrichtung zur Datenversorgung mit dem wenigstens einen Aggregat (1, 2, 3) vorgesehen ist, mit der das wenigstens eine Aggregat (1, 2, 3) zum Erfassen und/ oder Kommunizieren von bearbeitungs- oder steuerungsrelevanten Parametern der Vorrichtung berührungslos gekoppelt ist
**dadurch gekennzeichnet,**
**dass** sie als Bekantungsvorrichtung (13) zum Anbringen eines Kantenbandes (12) an einer Schmalseite (11a) des Werkstücks (11) ausgebildet ist, wobei das wenigstens eine Aggregat (2) zum Erfassen der Stärke des Kantenbandes (12) ausgelegt und/oder ein weiteres Aggregat als Stellantrieb vorgesehen ist, um die um eine Arbeitsposition zur Bearbeitung, insbesondere zur spanenden Bearbeitung, der Schmalseite (11a) und/oder des Kantenbandes (12) in Abhängigkeit der Dicke des Kantenbandes (12) zu variieren.

2. Vorrichtung nach Anspruch 1,
**dadurch gekennzeichnet,**
**dass** es sich bei dem wenigstens einen Aggregat um ein Bearbeitungsaggregat (1) zum Bearbeiten des Werkstücks, einen Sensor (2) zum Erfassen von Parametern und/oder ein Stellaggregat (3) zum Verstellen der Lage des Werkstücks oder/und des Bearbeitungsaggregats oder/und des Sensors handelt.

3. Vorrichtung nach einem der vorherigen Ansprüche,
**dadurch gekennzeichnet,**
**dass** die Kopplung zwischen Energieversorgung und/ oder Dateneinrichtung und Aggregat (1, 2, 3) induktiv und/oder über Funk gebildet ist.

4. Bearbeitungszentrum mit einer über einen Antrieb (5) antreibbaren Bearbeitungsspindel (4) und einer Vorrichtung nach einem der vorherigen Ansprüche,
**dadurch gekennzeichnet,**
**dass** der Antrieb (5) ferner mit einem ersten, insbesondere am Gehäuse (4a) der Arbeitsspindel (4) fest angebrachten Kopplungselement (6) zusammenwirkt, welches Energie des Antriebs (5) auf ein zweites mit dem ersten Kopplungselement (6) berührungslos gekoppeltes Kopplungselement (7) überträgt, und das zweite Kopplungselement (7) mit wenigstens einem mit Energie und/oder Daten zu versorgenden Aggregat (1, 2, 3) in der Weise gekoppelt ist, dass die vom zweiten Kopplungselement (7) aufgenommene Energie und/ oder die vom zweiten Kopplungselement (7) aufgenommenen Daten auf das wenigstens eine Aggregat (1, 2, 3) übertragen wird/werden.

## Claims

1. Device for machining workpieces from wood or wood substitute materials, having at least one energy supply and at least one unit (1, 2, 3), coupled thereto, to be supplied with energy, for machining the workpiece, displacing the workpiece or another component of the device, wherein the coupling between the at least one unit (1, 2, 3) to be supplied with energy and the energy supply is contact-free, wherein the contact-free coupling is configured so that the energy necessary to drive the unit (1, 2, 3) to be supplied can be transferred via the coupling to the drive (1, 2, 3), wherein at least one data means for data supply is provided with the at least one unit (1, 2, 3), with which data means the at least one unit (1, 2, 3) is coupled in a contact-free way to detect and / or communicate machining-related or control-related parameters of the device,
**characterised in that**
it is configured as an edging device (13) for applying an edge strip (12) to a narrow side (11 a) of the workpiece (11), wherein the at least one unit (2) is designed for detecting the strength of the edge strip (12) and / or a further unit is provided as an actuator to vary the one working position for machining, in particular for cutting, the narrow side (11 a) and / or the edge strip (12) depending upon the thickness of the edge strip (12).

2. Device according to claim 1,
**characterised in that**
the at least one unit is a machining unit (1) for machining the workpiece, a sensor (2) for detecting parameters and / or an actuator (3) for adjusting the position of the workpiece and / or the machining unit and / or the sensor.

3. Device according to one of the preceding claims,
**characterised in that**
the coupling between the energy supply and / or data means and the unit (1, 2, 3) is formed inductively and / or via radio.

4. Machining centre having a machining spindle (4) which can be driven via a drive (5) and having a device according to one of the preceding claims,
**characterised in that**
the drive (5) further cooperates with a first coupling element (6), in particular fixedly provided on the housing (4a) of the work spindle (4), the coupling element (6) transferring energy of the drive (5) to a second coupling element (7) coupled in a contact-free way to the first coupling element (6), and the second coupling element (7) is coupled to at least one unit (1, 2, 3) to be supplied with energy and / or data in such a way that the energy taken up by the second coupling element (7) and / or the data taken up by the second coupling element (7) is / are transferred to the at least one unit (1, 2, 3).

## Revendications

1. Dispositif pour le traitement de pièces à usiner en bois ou en matériaux de remplacement de bois, avec au moins une alimentation en énergie et au moins un groupe (1, 2, 3) à alimenter en énergie et couplé avec celle-ci pour traiter la pièce à usiner, déplacer la pièce à usiner ou un autre composant du dispositif, sachant que le couplage entre le groupe (1, 2, 3) à alimenter en énergie, au moins prévu, et l'alimentation en énergie est sans contact, sachant que le couplage sans contact est conçu de telle manière que, par son intermédiaire, l'énergie, nécessaire pour l'entraînement du groupe (1, 2, 3) à alimenter en énergie puisse être transmise de l'alimentation en énergie à l'entraînement (1, 2, 3), sachant que, pour la fourniture de données de l'au moins un groupe (1, 2, 3), est prévue une installation de données avec laquelle le groupe (1, 2, 3) au moins prévu est couplé sans contact pour la saisie et / ou la communication de paramètres d'intérêt pour le traitement ou la commande du dispositif
**caractérisé en ce que**
celui-ci est conçu en tant que dispositif de bordage (13) pour l'application d'un bande de bord (12) sur un côté étroit (11a) de la pièce à usiner (11), le groupe (2) au moins prévu étant destiné à détecter l'épaisseur de la bande de bord (12), et / ou qu'un autre groupe est prévu en tant que dispositif de réglage, destiné à varier la position de travail lors du traitement, en particulier du traitement avec tension du côté étroit (11a) et / ou de la bande de bord (12) en fonction de l'épaisseur de la bande de bord (12).

2. Dispositif selon la revendication 1,
**caractérisé en ce que**
le groupe au moins prévu consiste en un groupe de traitement (1), pour le traitement de la pièce à usiner, en un détecteur (2), pour la saisie de paramètres et / ou en un dispositif de réglage (3) pour régler la position de la pièce à usiner ou / et du groupe de traitement ou / et du détecteur.

3. Dispositif selon l'une des revendications précédentes,
**caractérisé en ce que**
le couplage entre l'alimentation en énergie et / ou l'installation de données et le groupe (1, 2, 3) est effectué par induction et / ou par radio.

4. Centre de traitement avec une broche de travail (4), qui peut être entraînée par l'intermédiaire d'un entraînement (5), et avec un dispositif selon l'une des revendications précédentes,
**caractérisé en ce que**
l'entraînement (5) coopère de plus avec un premier élément de couplage (6), qui, fixé, en particulier, au boîtier (4a) de la broche de travail (4), transmet l'énergie de l'entraînement (5) à un deuxième élément de couplage (7), qui est couplé sans contact avec le premier élément de couplage (6), et que le deuxième élément de couplage (7) est couplé avec au moins un groupe (1, 2, 3) à alimenter en énergie ou en données, de telle manière que l'énergie absorbée par le deuxième élément de couplage (7) et ou les données reçues par le deuxième élément de couplage (7) soit / soient transmise/s au groupe (1, 2, 3) au moins prévu.
